# EUROPÄISCHE PATENTSCHRIFT

(11) **EP 3 695 122 B1**
(45) Veröffentlichungstag und Bekanntmachung des Hinweises auf die Patenterteilung: **19.04.2023**
(21) Anmeldenummer: 18769108.4
(22) Anmeldetag: 04.09.2018
(51) Int. Cl.: F04D 29/58, F02B 39/00, F01P 3/20

(54) **VORRICHTUNG UND VERFAHREN ZUM BETREIBEN EINER ANTRIEBSMASCHINE**
DEVICE AND METHOD FOR OPERATING A DRIVE MACHINE
DISPOSITIF ET PROCÉDÉ PERMETTANT DE FAIRE FONCTIONNER UNE MACHINE DE TRANSMISSION

(30) Priorität: 11.10.2017 DE 102017218081
(43) Veröffentlichungstag der Anmeldung: 19.08.2020
(73) Patentinhaber: Robert Bosch GmbH, 70442 Stuttgart (DE)
(72) Erfinder: GLAZEWSKI, Tadeusz, 74321 Bietigheim-Bissingen (DE); BAEUERLE, Michael, 71735 Eberdingen (DE)
(86) Internationale Anmeldenummer: PCT/EP2018/073766
(87) Internationale Veröffentlichungsnummer: WO 2019/072458

(56) Entgegenhaltungen:
- EP-A1- 2 494 162
- WO-A1-2014/210094
- DE-A1-102015 203 596

## Beschreibung

Die Erfindung betrifft eine Antriebsmaschine für einen Verdichter und/oder eine Turbine, insbesondere eines Abgasturboladers, die einen auf einer drehbar in einem Gehäuse gelagerten Welle drehfest angeordneten Rotor sowie einen gehäusefesten Stator aufweist, sowie eine dem Stator zugeordnete Leistungselektronik und einen der Leistungselektronik zugeordneten und mit einem Kühlkreis eines externen Kühlsystem verbindbaren Kühlkanal.

Ferner betrifft die Erfindung einen Verdichter und/oder Turbine, insbesondere eines Abgasturboladers, mit zumindest einer drehbar in einem Gehäuse gelagerten Welle und mit einer elektrischen Antriebsmaschine wie sie vorstehend beschrieben wurde.

Weiterhin betrifft die Erfindung eine Antriebsvorrichtung für ein Kraftfahrzeug mit einer Brennkraftmaschine, die einen Verdichter und/oder eine Turbine, insbesondere eines Abgasturboladers, aufweist, wobei dem Verdichter und/oder der Turbine die oben genannte elektrische Antriebsmaschine zugeordnet ist.

Außerdem betrifft die Erfindung ein Verfahren zum Betreiben der oben genannten Antriebsmaschine.

### Stand der Technik

Antriebsmaschinen, Verdichter und/oder Turbine eines Abgasturboladers, Antriebsvorrichtungen sowie Verfahren der eingangs genannten Art sind aus dem Stand der Technik bekannt. Abgasturbolader werden im Allgemeinen dazu verwendet um die Leistungsfähigkeit sowie das Emissionsverhalten der Brennkraftmaschine, insbesondere Hubkolbenmotoren, zu optimieren. Hierfür wird im Frischlufttrakt der Brennkraftmaschine ein Verdichter vorgesehen, welcher die Frischluft verdichtet in die Brennkammern der Brennkraftmaschine zuführt, sodass eine erhöhte Luftmenge in die Brennkammern gelangt. Zum Antreiben des Verdichters wird üblicherweise eine Turbine im Abgastrakt der Brennkraftmaschine vorgesehen, wobei die Übertragung des Drehmoments über eine Welle geschieht. Weiterhin ist es bekannt, eine elektrische Unterstützung vorzusehen, um insbesondere einen verzögerten Druckaufbau bei niedrigen Drehzahlen des Hubkolbenmotors zu vermeiden. Durch die elektrische Unterstützung kann die Drehzahl der Welle unabhängig vom Abgasstrom erhöht werden. Zur Steuerung der elektrischen Unterstützung und somit Ansteuerung einer Antriebsmaschine wird eine Leistungselektronik benötigt. Die hohen Temperaturen im Motorraum sind für solche elektronischen Bauteile jedoch sehr belastend, insbesondere für die darin vorhandenen Kondensatoren. Um eine prinzipielle Kühlung der Leistungselektronik zu gewährleisten, ist es bekannt, die Leistungselektronik mit einer Kühlung, welche in den Kühlkreislauf der Brennkraftmaschine integriert ist, zu versehen.

Die DE 10 2015 203 596 A1 beschreibt einen Abgasturbolader, der einen elektrisch antreibbaren Verdichter aufweist, bei dem eine Leistungselektronik zur Ansteuerung des elektrischen Antriebs vorgesehen ist, die durch einen in Berührkontakt mit der Leistungselektronik stehenden Kühlmantel gekühlt wird.

Die EP 2 494 162 A1 beschreibt einen Kühlkreislauf zum Kühlen einer Leistungselektronik.

### Offenbarung der Erfindung

Die vorliegende Erfindung stellt eine Antriebsmaschine mit den Merkmalen des Anspruchs 1 zur Verfügung, welche gegenüber den aus dem Stand der Technik bekannten Antriebsmaschinen den Vorteil aufweist, dass die Haltbarkeit der Leistungselektronik verbessert wird. Jegliche Temperaturbelastung der Leistungselektronik führt zu einem erhöhten Verschleiß, insbesondere der Kondensatoren, und kann schließlich zum Ausfall des elektrischen Bauteils beziehungsweise der Leistungselektronik führen. Durch die erfindungsgemäße Antriebsmaschine wird ein hoher Verschleiß in einfacher und kostengünstiger Art und Weise vermieden und damit die Lebensdauer der Antriebsmaschine erhöht. Hierzu ist vorgesehen, dass dem Kühlkanal zumindest ein in Abhängigkeit von einer Betriebstemperatur der Leistungselektronik betätigtes Ventil zum Freigeben oder Verschließen eines Durchströmungsquerschnitts des Kühlkanals zugeordnet ist. Durch diese aktive Steuerung der Kühlung durch den Kühlkanal, wenn die Betriebstemperatur der Leistungselektronik einen Schwellenwert überschreitet, wird vermieden, dass die Leistungselektronik durch das im Vergleich zur Leistungselektronik wärmere Kühlwasser, welches selbst durch die Brennkraftmaschine erhitzt wurde, erwärmt wird. Lediglich in Situation, in welchen die Leistungselektronik die Antriebsmaschine ansteuert und hierdurch die Leistungselektronik selbst durch intrinsische, elektrische Abwärme erhitzt und in einen kritischen Temperaturbereich gebracht wird, wird die Kühlung zugeschalten, sodass Schäden an der Leistungselektronik vermieden werden können. Die Lebensdauer beziehungsweise Haltbarkeit der Leistungselektronik, insbesondere der Kondensatoren, kann deutlich gesteigert werden, da jede unnötige Erwärmung verhindert wird. Im Sinne der Erfindung soll unter dem Begriff "Leistungselektronik" immer die Leistungselektronik gemeint sein, welche der Antriebsmaschine für den Verdichter und/oder die eine Turbine zugeordnet ist, insbesondere eines Abgasturboladers, wenn nichts anderes angegeben ist. Ferner vorgesehen, dass das Ventil stromabwärts oder stromaufwärts der Leistungselektronik in dem Kühlkanal angeordnet ist.

In einer bevorzugten Ausführungsform ist vorgesehen, dass dem Ventil ein in Abhängigkeit von der Betriebstemperatur der Leistungselektronik gesteuerter Aktuator zum Betätigen des Ventils zugeordnet ist. Dies hat den Vorteil, dass die Betätigung des Ventils hydraulisch, pneumatisch oder auch elektrisch erfolgen kann. Somit kann flexibel auch auf kleinem zur Verfügung stehendem Bauraum die Erfindung verwirklicht werden. Weiterhin handelt es sich bei dem Aktuator um ein übliches und zu günstigen Stückpreisen erhältliches Bauteil.

Ferner ist bevorzugt vorgesehen, dass das Ventil einen mit dem Aktuator verbundenen Temperaturfühler aufweist, wobei der Temperaturfühler der Leistungselektronik zugeordnet ist. Dies hat den Vorteil, dass der Temperaturfühler exakt an der temperaturkritischen Stelle der Leistungselektronik platziert werden kann und dass nicht durch ungenaue Temperaturerfassung es zu Schäden an der Leistungselektronik kommt. Weiterhin handelst es sich bei dem Temperaturfühler um ein übliches und zu niedrigen Stückpreisen erhältliches Bauteil.

Weiterhin bevorzugt vorgesehen ist, dass der Temperaturfühler und der Aktuator zusammen ein Dehnstoffelement zum Betätigen des Ventils bilden. Diese Ausführungsform hat den Vorteil, dass durch die einfache Umsetzung und auch die Reduzierung auf wenige, insbesondere mechanische, Bauteile die Umsetzung der Erfindung sehr einfach, kostengünstig und ohne komplizierte konstruktive und elektronische Ausführung gelingt sowie eine hohe Ausfallsicherheit, durch die Vermeidung von zusätzlicher Elektronik, gewährleistet wird.

In einer bevorzugten Ausführungsform der Erfindung ist vorgesehen, dass das Ventil derart angeordnet und eingerichtet ist, dass das Ventil bei Überschreiten einer Betriebstemperatur der Leistungselektronik von 100 °C, insbesondere 110 °C, betätigt wird, um den Durchströmungsquerschnitt freizugeben. Ferner ist bevorzugt vorgesehen, dass das Dehnstoffelement derart ausgebildet und/oder angeordnet ist, dass es das Ventil bei Überschreiten einer Betriebstemperatur der Leistungselektronik von 100 °C, insbesondere 110 °C, betätigt, um den Durchströmungsquerschnitt freizugeben. Der Vorteil dieser Ausführungsformen ist, dass bei Freigabe des Durchströmungsquerschnitts bei einer Temperatur von 100 °C, insbesondere 110 °C, die Kühlung der Leistungselektronik besonders bedarfsgerecht geschieht, sodass die Anzahl der Erwärmungszyklen der Leistungselektronik auf ein Minimum reduziert wird.

In einer weiteren bevorzugten Ausführungsform ist vorgesehen, dass dem Ventil zumindest eine Rückstellfeder zugeordnet ist, welche dem Dehnstoffelement entgegenwirkt, um den Durchströmungsquerschnitt zu verschließen. Diese Ausführungsform hat den Vorteil, dass die Rückstellung des Ventils aktiv bewirkt wird und somit sofort nachdem keine Kühlung der Leistungselektronik mehr erforderlich ist die Kühlung auch aktiv unterbrochen wird.

Bevorzugt ist vorgesehen, dass die Antriebsmaschine eine Kühlmittelleitung aufweist, zu welcher der Kühlkanal als Bypass ausgebildet ist. Diese Ausführungsform hat den Vorteil, dass in dem Teil des Kühlsystems, zu welcher der Kühlkanal der Leistungselektronik gehört, stromabwärts oder stromaufwärts zur Leistungselektronik liegende Bauteile der Brennkraftmaschine auch dann mit Kühlflüssigkeit gekühlt werden, wenn das in Abhängigkeit von einer Betriebstemperatur der Leistungselektronik betätigbare Ventil noch nicht betätigt, d.h. geöffnet, wurde.

In einer weiteren bevorzugten Ausführungsform ist vorgesehen, dass das Ventil eine Hystereseschaltung aufweist. Diese Ausführungsform hat den Vorteil, dass durch die Hystereseschaltung bei Einsetzen der Kühlung der Leistungselektronik und der dadurch gegebenenfalls sofortigen Unterschreitung einer Betriebstemperatur, welcher zur Betätigung des Ventils führte, für eine Mindest-Zeitperiode, beispielsweise 10 Sekunden, die Unterbrechung der Kühlung verhindert wird. Dies verhindert ein schnell aufeinander folgendes Öffnen und Verschließen des Durchströmungsquerschnitts. Wiederholtes Öffnen und Verschließen des Durchströmungsquerschnitts kann zu Beschädigungen am betätigbaren Ventil oder Vibrationen im System, insbesondere Kühlungssystem, führen. Außerdem wird verhindert, dass sich Ablagerungen im Kühlkanal ansammeln.

Der erfindungsgemäße Verdichter und/oder die erfindungsgemäße Turbine, insbesondere Abgasturbolader, mit den Merkmalen des Anspruchs 10 zeichnen sich durch die erfindungsgemäße Ausbildung der Antriebsmaschine aus. Es ergeben sich hierdurch die bereits genannten Vorteile.

Die erfindungsgemäße Antriebsvorrichtung mit den Merkmalen des Anspruchs 11 zeichnet sich durch den erfindungsgemäßen Verdichter und/oder die erfindungsgemäße Turbine, insbesondere durch den erfindungsgemäßen Abgasturbolader aus. Es ergeben sich hierdurch die bereits genannten Vorteile.

Das erfindungsgemäße Verfahren mit den Merkmalen des Anspruchs 12 zeichnet sich dadurch aus, dass das Ventil in Abhängigkeit von einer Betriebstemperatur der Leistungselektronik zum Freigeben oder Verschließen eines Durchströmungsquerschnitts des Kühlkanals betätigt wird, insbesondere dann, wenn die Betriebstemperatur 100 °C, vorzugsweise 110 °C, überschreitet, wird es dazu angesteuert, den Durchströmungsquerschnitt freizugeben beziehungsweise zu öffnen. Es ergeben sich hierbei die oben bereits genannten Vorteile.

Weitere Vorteile und bevorzugte Merkmale und Merkmalskombinationen ergeben sich insbesondere aus dem zuvor beschriebenen sowie aus den Ansprüchen.

Im Folgenden soll die Erfindung anhand einer Figur näher erläutert werden. Dazu zeigt die
- Figur: einen vorteilhaften Abgasturbolader mit einer elektrischen Antriebsmaschine.

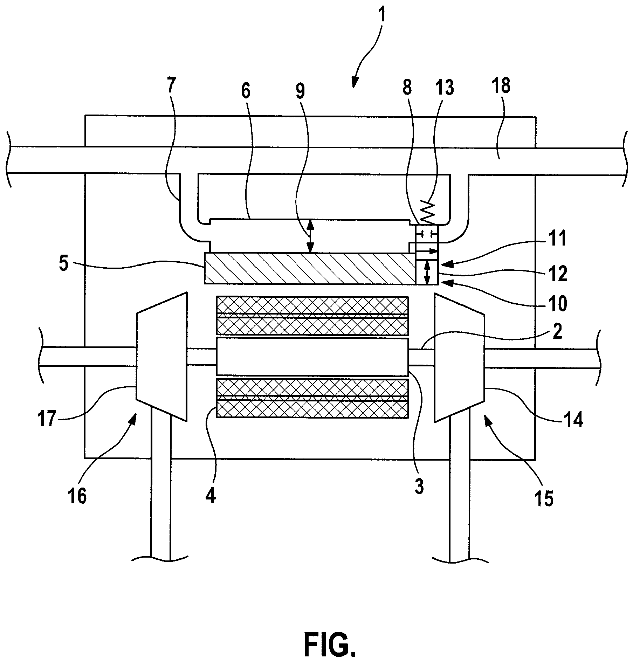

Die Figur zeigt in einer vereinfachten Darstellung einen vorteilhaften Abgasturbolader mit einer integrierten Antriebsmaschine 1, die einen auf einer drehbar in einem Gehäuse gelagerten Welle 2 drehfest angeordneten Rotor 3 sowie einen gehäusefesten Stator 4 aufweist, der zumindest eine bestrombare Wicklung (hier im Bild nicht gezeigt) aufweist, sowie eine Leistungselektronik 5 und einen der Leistungselektronik 5 zugeordneten und mit einem Kühlkreis (in der Figur nicht gezeigt) eines externen Kühlsystems (in der Figur nicht gezeigt) verbindbaren Kühlkanal 6, wobei der Kühlkanal 6 vorliegend als Bypass 7 zu einer mit dem Kühlkreis des externen Kühlsystems verbunden beziehungsweise verbindbaren Kühlmittelleitung 18 der Antriebsmaschine ausgebildet ist. Ein betätigbares Ventil 8 ist dem Kühlkanal 6 zugeordnet. Mit diesem betätigbaren Ventil 8 wird vorliegend bei einer Überschreitung einer Betriebstemperatur der Leistungselektronik 5 von 100 °C ein Durchströmungsquerschnitt 9 des Kühlkanals 6 geöffnet bzw. freigegeben.

Das betätigbare Ventil 8 wird dann gemäß einem ersten Ausführungsbeispiel durch einen ansteuerbaren Aktuator 10 betätigt. Dabei ist dem Ventil 8 ein Temperaturfühler 11 zugeordnet, welcher mit dem Aktuator 10 verbunden ist, wobei der Temperaturfühler 11 der Leistungselektronik 5 zugeordnet ist. In Abhängigkeit von der durch den Temperaturfühler 11 erfassten Temperatur der Leistungselektronik 5 wird somit der Aktuator 10 angesteuert, und das Ventil 8 zum Freigeben oder Verschließen des Durchströmungsquerschnitts 9 des Kühlkanals 6 betätigt. Insbesondere dann, wenn die Temperatur der Leistungselektronik 5 100 °C, insbesondere 110 °C, übersteigt, öffnet der Aktuator 10 das Ventil 8 beziehungsweise gibt den Durchströmungsquerschnitt 9 frei, sodass das vom Kühlsystem kommende Kühlmittel durch den Kühlkanal 6 strömt und die Leistungselektronik 5 kühlt beziehungsweise von dieser Wärme abführt.

Gemäß einem zweiten Ausführungsbeispiel ist dem Ventil 8 ein Dehnstoffelement 12 zugeordnet, das im Wesentlichen auch im Bereich der Leistungselektronik 5 liegt. Das Dehnstoffelement 12 ist dazu ausgebildet, bei Überschreiten einer vorgebbaren Grenztemperatur in seiner Größe zu verändern, insbesondere zu wachsen. Vor allem ist vorgesehen, dass dann, wenn die Leistungselektronik 5 eine Temperatur von 100 °C oder 110 °C übersteigt, das Dehnstoffelement 12 zu wachsen beginnt und dadurch das Ventil 8 in die geöffnete Stellung bewegt, in welcher der Durchströmungsquerschnitt 9 des Kühlkanals 6 freigegeben ist. Unterschreitet die Temperatur der Leistungselektronik 5 die zuvor genannte Auslösetemperatur von 100 °C oder 110 °C, so zieht sich das Dehnstoffelement 12 wieder zusammen und das Ventil 8 wird in seine Ausgangsstellung verbracht, in welcher der Durchströmungsquerschnitt 9 geschlossen ist. Um diese Rückbewegung zu optimieren, ist dem Dehnstoffelement 12 vorliegend eine Rückstellfeder 13 zugeordnet, die dem Dehnstoffelement 12 entgegenwirkt.

Auf der Welle 2, auf welcher der Rotor 3 drehfest angeordnet ist, sind außerdem ein Turbinenlaufrad 14 einer Turbine 15 sowie ein Verdichterlaufrad 17 eines Verdichters 16 drehfest angeordnet. Die Turbine 14 weist außerdem einen mit einer Brennkraftmaschine verbundenen/verbindbaren Strömungskanal auf, durch welchen ein Abgasstrom der Turbine 15 zu deren Antrieb zugeführt wird, sowie ein Auslasskanal, durch welchen der Abgasstrom abgeführt wird, nachdem er Arbeit an der Turbine 15 verrichtet hat. Dem Verdichter 16 ist ein Frischluftkanal zugeordnet, durch welchen Umgebungsluft dem Verdichter zugeführt wird, die von dem Verdichter verdichtet und durch einen weiteren Strömungskanal der Brennkraftmaschine zugeführt wird, um die Luftfüllung in Zylindern der Brennkraftmaschine zu erhöhen. Weil das Turbinenrad 14 und das Verdichterrad 17 drehfest auf der Welle 2 angeordnet sind, wird der Verdichter 16 durch die Turbine 15 im Betrieb der Brennkraftmaschine angetrieben.

Durch die zusätzliche elektrische Antriebsmaschine 1 ist es nunmehr möglich, den durch Turbine 15 und Verdichter 16 gebildeten Abgasturbolader 1 auch unabhängig von dem von der Brennkraftmaschine kommenden Abgasstrom anzutreiben, sodass unabhängig von dem zur Verfügung gestellten Abgasstrom die Luftfüllung in den Zylindern der Brennkraftmaschine erhöhbar ist.

Bei niedrigen Leistungsanforderungen ist ein Hinzuschalten der elektrischen Maschine 1 nicht oder nicht unbedingt notwendig. In einem derartigen Zustand verrichtet die Leistungselektronik 5 keine Leistung und weist daher eine nichtige Betriebstemperatur auf. In diesem Zustand ist das Ventil 8 geschlossen und es wird verhindert, dass Kühlwasser, das vom Kühlsystem der Brennkraftmaschine kommt, und dass dann eine höhere Temperatur als die abgekühlte Leistungselektronik 5 aufweist, die Leistungselektronik 5 erwärmt, ohne dass diese benutzt wird. Erst dann, wenn die elektrische Maschine in Betrieb genommen wurde und die Leistungselektronik 5 Wärme entwickelt beziehungsweise sich aufwärmt und insbesondere die zuvor genannte Grenztemperatur erreicht, betätigt der Aktuator 10 das Ventil 8, wodurch der Kühlkanal 6 freigegeben und das Kühlwasser durch den Kühlmittelkanal 6 geführt wird. Im Anschluss transportiert das Kühlmittel die von der Leistungselektronik 5 erzeugte Wärme ab und kühlt dadurch die Leistungselektronik 5 auf eine vorteilhafte Betriebstemperatur herunter. Ist dem Ventil 8 das Dehnstoffelement 12 zugeordnet, so bildet dieses sowohl den Aktuator 10 als auch den Temperaturfühler 11, sodass eine besonders kompakte Ausführung der Einrichtung zur Betätigung des Ventils 8 geboten ist.

Während gemäß dem vorliegenden Ausführungsbeispiel das Ventil 8 stromabwärts der Leistungselektronik 5 an dem Kühlkanal 6 angeordnet ist, kann gemäß einem weiteren Ausführungsbeispiel vorgesehen sein, dass das Ventil 8 stromaufwärts der Leistungselektronik 5 oder auch im Bereich der Leistungselektronik 5 angeordnet ist.

Gemäß einem weiteren Ausführungsbeispiel ist außerdem vorgesehen, dass die elektrische Maschine 1 nicht in einen Abgasturbolader, sondern in einen elektromotorischen Verdichter 16 der Brennkraftmaschine integriert ist, auf die Turbine 15 also verzichtet wird.

Die zuvor beschriebenen Ausführungsbeispiele haben jeweils den Vorteil, dass die Lebensdauer der elektrischen Maschine 1 und damit des Abgasturboladers beziehungsweise des Verdichters 16 insgesamt erhöht wird, weil die elektrischen/elektronischen Komponenten der Leistungselektronik 5 Temperaturgeschont werden, wodurch beispielsweise Kondensatoren der Leistungselektronik 5 eine deutliche Lebensdauererhöhung erfahren.

## Patentansprüche

1. Antriebsmaschine für einen Verdichter und/oder eine Turbine, insbesondere eines Abgasturboladers, die einen auf einer drehbar in einem Gehäuse gelagerten Welle (2) drehfest angeordneten Rotor (3) sowie einen gehäusefesten Stator (4) aufweist, sowie eine dem Stator (4) zugeordnete Leistungselektronik (5) und einen der Leistungselektronik (5) zugeordneten und mit einem Kühlkreis eines externen Kühlsystems verbindbaren Kühlkanal (6), **dadurch gekennzeichnet, dass** dem Kühlkanal (6) zumindest ein in Abhängigkeit von einer Betriebstemperatur der Leistungselektronik (5) betätigtes Ventil (8) zum Freigeben oder Verschließen eines Durchströmungsquerschnitts (9) des Kühlkanals (6) zugeordnet ist, wobei das Ventil (8) stromabwärts oder stromaufwärts der Leistungselektronik (5) in dem Kühlkanal (6) angeordnet ist.

2. Antriebsmaschine nach Anspruch 1, **dadurch gekennzeichnet, dass** dem Ventil (7) ein in Abhängigkeit von der Betriebstemperatur der Leistungselektronik (5) gesteuerter Aktuator (10) zum Betätigen des Ventils (7) zugeordnet ist.

3. Antriebsmaschine nach Anspruch 2, **dadurch gekennzeichnet, dass** das Ventil (8) einen mit dem Aktuator verbundenen Temperaturfühler (11) aufweist, wobei der Temperaturfühler der Leistungselektronik (5) zugeordnet ist.

4. Antriebsmaschine nach Anspruch 3, **dadurch gekennzeichnet, dass** der Temperaturfühler und der Aktuator zusammen ein Dehnstoffelement (12) zum Betätigen des Ventils (8) bilden.

5. Antriebsmaschine nach einem der vorhergehenden Ansprüche, **dadurch gekennzeichnet, dass** das Ventil (8) derart angeordnet und eingerichtet ist, dass das Ventil (8) bei Überschreiten einer Betriebstemperatur der Leistungselektronik (5) von 100 °C, insbesondere 110°C, betätigt wird, um den Durchströmungsquerschnitt (9) freizugeben.

6. Antriebsmaschine nach Anspruch 4, **dadurch gekennzeichnet, dass** das Dehnstoffelement (12) derart ausgebildet und/oder angeordnet ist, dass es das Ventil (8) bei Überschreiten einer Betriebstemperatur der Leistungselektronik (5) von 100 °C, insbesondere 110 °C, betätigt, um den Durchströmungsquerschnitt (9) freizugeben.

7. Antriebsmaschine nach einem der Ansprüche 4 bis 6, **dadurch gekennzeichnet, dass** dem Ventil (8) zumindest eine Rückstellfeder (13) zugeordnet ist, welche dem Dehnstoffelement entgegenwirkt, um den Durchströmungsquerschnitt (9) zu verschließen.

8. Antriebsmaschine nach einem der vorhergehenden Ansprüche, **dadurch gekennzeichnet, dass** sie eine Kühlmittelleitung (18) aufweist, zu welcher der Kühlkanal (6) als Bypasskanal (7) ausgebildet ist.

9. Antriebsmaschine nach einem der vorhergehenden Ansprüche, **dadurch gekennzeichnet, dass** das Ventil (8) eine Hystereseschaltung aufweist.

10. Verdichter und/oder Turbine, insbesondere Abgasturbolader, mit einer drehbar in einem Gehäuse gelagerten Welle (2) und mit einer Antriebsmaschine (1) gemäß einem der Ansprüche 1 bis 10.

11. Antriebsvorrichtung für ein Kraftfahrzeug mit einer Brennkraftmaschine, die einen Verdichter (16) und/oder eine Turbine (15), insbesondere eines Abgasturboladers, aufweist, wobei dem Verdichter (16) und/oder der Turbine (15) eine elektrische Antriebsmaschine (1) zugeordnet ist, **gekennzeichnet durch** die Ausbildung der Antriebsmaschine (1) nach einem der Ansprüche 1 bis 9 oder der Ausbildung des Verdichters (16) und/oder Turbine (15) nach Anspruch 10.

12. Verfahren zum Betreiben einer Antriebsmaschine, gemäß einem der Ansprüche 1 bis 9, aufweisend einen auf einer drehbar in einem Gehäuse gelagerten Welle (2) drehfest angeordneten Rotor (3) und einen gehäusefesten Stator (4) sowie eine dem Stator (4) zugeordnete Leistungselektronik (5) und einen der Leistungselektronik (5) zugeordneten und mit einem Kühlkreis eines externen Kühlsystems verbindbaren Kühlkanal (6), **dadurch gekennzeichnet, dass** dem Kühlkanal (6) zumindest ein Ventil (8) zum Freigeben oder Verschließen eines Durchströmungsquerschnitts (9) des Kühlkanals (6) zugeordnet wird, das in Abhängigkeit von einer Betriebstemperatur der Leistungselektronik (5) zum Freigeben oder Verschließen eines Durchströmungsquerschnitts (9) des Kühlkanals (6) betätigt wird, wobei das Ventil (8) stromabwärts oder stromaufwärts der Leistungselektronik (5) in dem Kühlkanal (6) angeordnet ist.

## Claims

1. Drive machine for a compressor and/or a turbine, in particular of an exhaust turbocharger, which has a rotor (3), disposed so as to be rotationally fixed on a shaft (2) rotatably mounted in a housing, and a stator (4) fixed to the housing, and a power electronics unit (5) assigned to the stator (4), and a cooling duct (6) which is assigned to the power electronics unit (5) and is able to be connected to a cooling circuit of an external cooling system, **characterized in that** the cooling duct (6) is assigned at least one valve (8) which as a function of an operating temperature of the power electronics unit (5) is activated for releasing or closing a flow cross section (9) of the cooling duct (6), wherein the valve (8) is disposed in the cooling duct (6) so as to be downstream or upstream of the power electronics unit (5).

2. Drive machine according to Claim 1, **characterized in that** the valve (7) is assigned an actuator (10) which as a function of the operating temperature of the power electronics unit (5) is controlled for activating the valve (7).

3. Drive machine according to Claim 2, **characterized in that** the valve (8) has a temperature sensor (11) which is connected to the actuator, wherein the temperature sensor is assigned to the power electronics unit (5).

4. Drive machine according to Claim 3, **characterized in that** the temperature sensor and the actuator conjointly form an expansion material element (12) for activating the valve (8).

5. Drive machine according to one of the preceding claims, **characterized in that** the valve (8) is disposed and specified in such a manner that the valve (8), when exceeding an operating temperature of the power electronics unit (5) of 100°C, in particular 110°C, is activated so as to release the flow cross section (9).

6. Drive machine according to Claim 4, **characterized in that** the expansion material element (12) is configured and/or disposed in such a manner that the latter, when exceeding an operating temperature of the power electronics unit (5) of 100°C, in particular 110°C, activates the valve (8) so as to release the flow cross section (9).

7. Drive machine according to one of Claims 4 to 6, **characterized in that** the valve (8) is assigned at least one restoring spring (13) which counteracts the expansion material element so as to close the flow cross section (9).

8. Drive machine according to one of the preceding claims, **characterized in that** said drive machine has a coolant line (18), the cooling duct (6) being configured as a bypass duct (7) thereof.

9. Drive machine according to one of the preceding claims, **characterized in that** the valve (8) has a hysteresis circuit.

10. Compressor and/or turbine, in particular exhaust turbocharger, having a shaft (2) rotatably mounted in a housing, and having a drive machine (1) according to one of Claims 1 to 10.

11. Drive device for a motor vehicle having an internal combustion engine which has a compressor (16) and/or a turbine (15), in particular of an exhaust turbocharger, wherein the compressor (16) and/or the turbine (15) are/is assigned an electric drive machine (1), **characterized by** the configuration of the drive machine (1) according to one of Claims 1 to 9, or the configuration of the compressor (16) and/or turbine (15) according to Claim 10.

12. Method for operating a drive machine according to one of Claims 1 to 9, having a rotor (3), disposed so as to be rotationally fixed on a shaft (2) rotatably mounted in a housing, and a stator (4) fixed to the housing, and a power electronics unit (5) assigned to the stator (4), and a cooling duct (6) which is assigned to the power electronics unit (5) and is able to be connected to a cooling circuit of an external cooling system, **characterized in that** the cooling duct (6) is assigned at least one valve (8) for releasing or closing a flow cross section (9) of the cooling duct (6), said valve (8) as a function of an operating temperature of the power electronics unit (5) being activated for releasing or closing a flow cross section (9) of the cooling duct (6), wherein the valve (8) is disposed in the cooling duct (6) so as to be downstream or upstream of the power electronics unit (5).

## Revendications

1. Machine d'entraînement pour un compresseur et/ou une turbine, en particulier un turbocompresseur à gaz d'échappement, qui présente un rotor (3) disposé de manière solidaire en rotation sur un arbre (2) monté à rotation dans un carter ainsi qu'un stator (4) solidaire du carter, ainsi qu'une électronique de puissance (5) associée au stator (4) et un canal de refroidissement (6) associé à l'électronique de puissance (5) et pouvant être connecté à un circuit de refroidissement d'un système de refroidissement externe, **caractérisée en ce qu'**au moins une soupape (8) actionnée en fonction d'une température de fonctionnement de l'électronique de puissance (5) et servant à libérer ou fermer une section transversale d'écoulement (9) du canal de refroidissement (6) est associée au canal de refroidissement (6), la soupape (8) étant disposée en aval ou en amont de l'électronique de puissance (5) dans le canal de refroidissement (6).

2. Machine d'entraînement selon la revendication 1, **caractérisée en ce qu'**un actionneur (10) commandé en fonction de la température de fonctionnement de l'électronique de puissance (5) et servant à actionner la soupape (7) est associé à la soupape (7).

3. Machine d'entraînement selon la revendication 2, **caractérisée en ce que** la soupape (8) présente une sonde de température (11) connectée à l'actionneur, la sonde de température étant associée à l'électronique de puissance (5).

4. Machine d'entraînement selon la revendication 3, **caractérisée en ce que** la sonde de température et l'actionneur forment conjointement un élément expansible (12) servant à actionner la soupape (8).

5. Machine d'entraînement selon l'une des revendications précédentes, **caractérisée en ce que** la soupape (8) est disposée et conçue de telle sorte que la soupape (8) est actionnée lorsqu'une température de fonctionnement de l'électronique de puissance (5) de 100 °C, en particulier de 110°C, est dépassée, afin de libérer la section transversale d'écoulement (9).

6. Machine d'entraînement selon la revendication 4, **caractérisée en ce que** l'élément expansible (12) est réalisé et/ou disposé de telle sorte qu'il actionne la soupape (8) lorsqu'une température de fonctionnement de l'électronique de puissance (5) de 100 °C, en particulier de 110°C, est dépassée, afin de libérer la section transversale d'écoulement (9).

7. Machine d'entraînement selon l'une des revendications 4 à 6, **caractérisée en ce qu'**au moins un ressort de rappel (13) est associé à la soupape (8), lequel s'oppose à l'élément expansible afin de fermer la section transversale d'écoulement (9).

8. Machine d'entraînement selon l'une des revendications précédentes, **caractérisée en ce qu'**elle présente une conduite de réfrigérant (18) par rapport à laquelle le canal de refroidissement (6) est réalisé en tant que canal de dérivation (7).

9. Machine d'entraînement selon l'une des revendications précédentes, **caractérisée en ce que** la soupape (8) présente un circuit à hystérésis.

10. Compresseur et/ou turbine, en particulier turbocompresseur à gaz d'échappement, comprenant un arbre (2) monté à rotation dans un carter et comprenant une machine entraînement (1) selon l'une des revendications 1 à 10.

11. Dispositif d'entraînement pour un véhicule automobile comprenant un moteur à combustion interne qui présente un compresseur (16) et/ou une turbine (15), en particulier d'un turbocompresseur à gaz d'échappement, une machine d'entraînement électrique (1) étant associée au compresseur (16) et/ou à la turbine (15), **caractérisé par** la réalisation de la machine d'entraînement (1) selon l'une des revendications 1 à 9 ou la réalisation du compresseur (16) et/ou de la turbine (15) selon la revendication 10.

12. Procédé de fonctionnement d'une machine d'entraînement selon l'une des revendications 1 à 9, présentant un rotor (3) disposé de manière solidaire en rotation sur un arbre (2) monté à rotation dans un carter et un stator (4) solidaire du carter, ainsi qu'une électronique de puissance (5) associée au stator (4) et un canal de refroidissement (6) associé à l'électronique de puissance (5) et pouvant être connecté à un circuit de refroidissement d'un système de refroidissement externe, **caractérisé en ce qu'**au moins une soupape (8) servant à libérer ou fermer une section transversale d'écoulement (9) du canal de refroidissement (6) est associée au canal de refroidissement (6), laquelle soupape est actionnée en fonction d'une température de fonctionnement de l'électronique de puissance (5) pour libérer ou fermer une section transversale d'écoulement (9) du canal de refroidissement (6), la soupape (8) étant disposée en aval ou en amont de l'électronique de puissance (5) dans le canal de refroidissement (6).
